# EUROPEAN PATENT SPECIFICATION

(11) **EP 1 266 344 B1**
(45) Date of publication and mention of the grant of the patent: **04.08.2004**
(21) Application number: 01911995.7
(22) Date of filing: 19.03.2001
(51) Int. Cl.: G06K 7/14, G06K 7/12, G06K 19/06

(54) **A DATA CARRIER, A DEVICE FOR READING THE DATA CARRIER, AND A SECURITY SYSTEM**
DATENTRÄGER, VORRICHTUNG ZUM LESEN DES DATENTRÄGERS UND SICHERSHEITSSYSTEM
SUPPORT DE DONNEES, DISPOSITIF DE LECTURE POUR SUPPORT DE DONNEES ET SYSTEME DE SECURITE

(30) Priority: 23.03.2000 GB 0007079
(43) Date of publication of application: 18.12.2002
(73) Proprietor: Krypton Enterprises Limited, Douglas, Isle of Man, IM1 2SH (GB)
(72) Inventor: KEAY, Peter, Jeffrey KE Technology UK Limited, Norfolk IP25 7DS (GB)
(74) Representative: Beck, Simon Antony
(86) International application number: PCT/GB2001/001223
(87) International publication number: WO 2001/071646

(56) References cited:
- WO-A-97/21186
- US-A- 5 005 873
- US-A- 5 525 798
- US-A- 5 576 528
- US-A- 5 666 417
- US-A- 5 818 032

## Description

The present invention relates a data carrier, a reader for the data carrier and a security system comprising the data carrier and the reader.

It is now widespread practice to encode machine readable data on items such as products, documents, cash cards, credit cards and security cards. These codes are typically in the form of a black and white bar code printed on the product, document or identity card. The bar codes typically use a standard "font" such that various data systems can read the code to establish an alphanumeric equivalent to the bar code. The bar code typically represents an alphanumeric word having 10 or so characters. Alternatively machine readable magnetic strips may be provided as is the case for cards useable in cash dispensers. However the widespread availability of card readers and writers has enabled such cards to be reproduced by criminals.

The use of colour in bar codes has been proposed. US 3,684,868 discloses a bar code comprising black, white and green bars. The bar code reader described therein identifies transitions from white to black, black to green, and green to white as a binary 1 signals, and transitions from white to green, green to black, and black to white as binary 0 transmissions. The patent document does not appear to indicate any advantages associate with utilising this system compared to the more standard bar code formed solely of black and white bars.

US-A-5 666 417, which represents the basis for the preamble of claim 1, discloses a decoding apparatus for reading a data carrier having a plurality of markers thereon, wherein each marker has a spectrum distinguishable from the others, the decoding apparatus comprising a broad band light source arranged to illuminate the data carrier and three detectors arranged to measure intensities in three different wave length ranges.

According to a first aspect of the present invention, there is provided a device for storing data, comprising a substrate having at least one marker thereon, wherein the or each marker is formed of a material having a predetermined spectrum, said markers being distinguishable from another.

Preferably the or each marker may have one of a series of predetermined spatial extents, such as width or shape such that further information may be encoded in the marker besides that encoded by its spectrum.

Advantageously a reference pattern is provided on the data carrier such that the width of the or each marker can be accurately determined, even when the card is manually moved with respect to a reader.

Guard bands may be provide between markers so as to facilitate identification of the boundaries between markers. However, even the guard bars may be spatially modulated, ie of variable width or shape, so as to encode information.

The substrate may be a card, such as a security card, or a bank card, ie cash card or credit card. Thus this technology can be used in place of or in addition to smart card and magnetic strip technologies.

According to a second aspect of the present invention, there is provided an apparatus for reading a data carrier having a plurality of coloured markers thereon, wherein each marker has a spectrum distinguishable from the others, the apparatus comprising a broad band light source arranged to illuminate the data carrier and a detector arranged to measure the intensities of a plurality of wave lengths so as to accurately identify the spectrum of the or each marker.

As used herein the term "light" is intended to encompass not only the visible spectrum, but also the infrared and ultra violet portions of the electromagnetic spectrum.

The use of a detector which is sensitive to intensity at a plurality of predetermined wavelengths enables a secure data encoding system to be devised. Indeed, the system is so secure that visually identical fakes can be detected.

The perception of colour is remarkably complex. It will be appreciated that just a few pigments will be used to synthesis a wide range of colours. This can be seen intuitively since a mere four pigments, namely magenta, cyan, yellow and black are used in subtractive colour mixing (printing) to replicate a wide range of colours. Colours which are visually similar or identical when perceived by the eye may nevertheless have widely varying spectra. The use of spectral measurement rather than mere colour identification provides both for enhanced sensitivity and a greater density of information coding.

Preferably the detector is a spectrometer or a spectrophotometer. The spectrometer may, for example, be a direct view charged coupled device spectrometer. Such devices are available with a large number of individual detector channels, allowing good resolution of spectra. Furthermore their performance is relatively stable over time and thus it is technically possible to separately identify a large number of dyes, inks or pigments, or mixtures thereof. Thus such a system has potential to identify many separate spectra and/or colours per marker. In a prototype system, the spectral detector can readily identify over 200 different spectra from commercially available inks and pigments.

By ensuring that the supply of inks or pigments is limited, such that they are only available from authorised sources to authorised users, such as security card manufacturers and banks, it becomes possible to provide a system having a good level of security. Even if a forger can replicate a colour on the card, it is unlikely that he will be able to find the correct mixture of components and dyes in order to accurately replicate the spectra.

Preferably each marker may also be of varying width or spatial extent so as to further encode the information conveyed by the mark. In a preferred embodiment of the present invention, a security card may be provided in which the markers are printed in sequence in an elongate stripe. However, the markers may be of varying widths within the stripe, such that the width further encodes information. It is technically easy to encode widths of the markers in 0.1 mm steps.

In a prototype embodiment, the spectrometer was able to distinguish in excess of M different spectra, where M may exceed 200, and a further detector was able to resolve N different widths of marker where N = 10. Thus each marker was able to encode M x N discreet symbols, ie over 2000 symbols. It will also be appreciated that multiple markers may also be recorded in a row, thus if 20 independent markers are recorded on a security card, this gives the potential to represent over 2000²⁰ unique codes, or approximately 10⁶⁶ individual codes.

Thus a relatively simple and inexpensive card or printing scheme may be used to encode a truly colossal amount of data onto a substrate. The individual symbols, or the combination of reading all of them may be used to address a lookup table in order to decode information relating to that card or product. A large number of coding possibilities afforded by this scheme means that substantially identical cards may be issued to different organisations for different purposes, with each user organisation have a flexibility to adopt its own coding scheme.

Advantageously the apparatus includes and edge detector for accurately determining the edges of the various markers. The transition from one marker to another marker will be indicated by a step change as the boundary between the markers are crossed. However, a detection of edges can further be enhanced by the provision of guard bands of a predetermined width between each marker. The guard bands may be transparent or opaque. The use of guard bands gives an identifiable pattern or intensity level which can be searched for in order to give a high degree of confidence that the edge of a marker has been located.

Additionally and/or alternatively, a reference marker, such as a graticule may also be printed on the substrate, and the reading apparatus may be responsive to this in order that it can use this information to accurately assess the width of the various markers. This information is particularly useful in systems where a user swipes the card through a reader. However, other systems may be employed where the card is placed in a reception region of a reader and an optical scanning system is used to scan an interrogation beam across the markers. In such a system, the position along the card of the light beam and speed of motion of the light beam is accurately known, and this may be used to achieve greater information coding density by allowing the incremental change in the spatial extent of markers to be reduced.

According to a third aspect of the present invention, there is provided a method of decoding data carried on a data carrier, wherein the data is encoded by a plurality of markers having different spectra, the method comprising the steps of:
- Illuminating a marker on the carrier;
- Reading its spectrum, and if appropriate, its spatial extent; and
- Identifying the spectrum, and if appropriate, its spatial extent, and using this to access a lookup table to decode the information represented by the marker.

According to a fourth aspect of the present invention there is provided a method of encoding data on a data carrier, the method comprising the steps of producing a lookup table correlating information with a data symbol, the symbol being defined by a predetermined pigment or ink having a predetermined spectrum and optionally a spatial extent over which the pigment is deposited; and printing the symbol on the data carrier.

The present invention will further be described, by way of example, with reference to the accompanying drawings, in which:
Figure 1 is a plan view of a security card constituting an embodiment of the present invention;
Figure 2 schematically illustrates a portion of a coding strip in greater detail; and
Figure 3 schematically illustrates a decoding apparatus for use with the card shown in Figures 1 and 2.

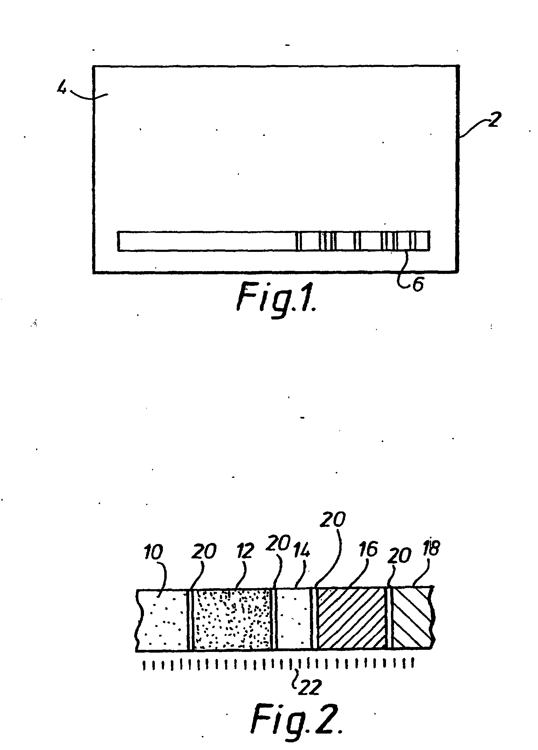

The card shown in Figure 1 comprises a plastic substrate 2 having a first portion 4 for bearing human readable indicia and a second portion 6 of which machine readable markers are laid down in the form of a stripe.

Figure 2 schematically illustrates a portion of the machine readable stripe in enhanced detail. In the portion illustrated the machine readable section comprises first to fifth coloured regions 10, 12, 14, 16 and 18 respectively. Each region is printed using a predetermined and well controlled ink or blend of inks. Thus each region has a unique and reproducible spectrum. Each region is separated from its neighbour by a guard band 20. Each guard band has a uniform and known width. The guard bands may be printed using a known ink, but for simplicity are either clear, white or black. Additionally, a graticule 22 is also printed, which comprises a series of equally spaced bands thereby giving a measurement system which can be interrogated in order to increase the accuracy of the measurement of the width of any of the regions 10, 12, 14, 16 and 18.

It will be seen in Figure 2 that the regions 10 - 18 have different widths. The width of each region may be used to encode further information. Indeed, in more complex schemes, the regions may be subdivided into more complex shapes such that a combination of the width of the region and the pattern embedded in it may also convey information in addition to that conveyed by the coloured pigment. In a simple scheme the width of the bars may vary from, say 0.1 to 1.0 mm allowing encoding of the digits 0 to 9.

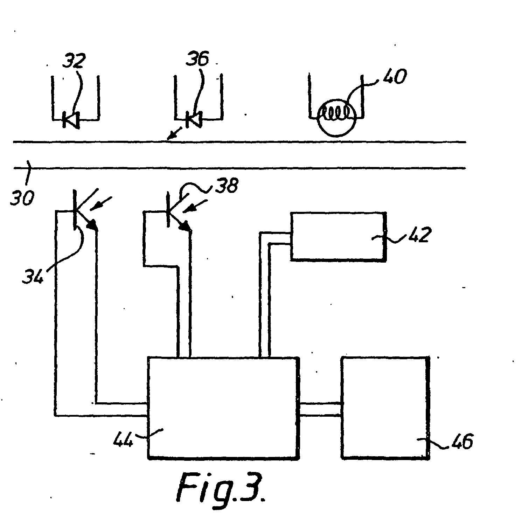

Figure 3 schematically illustrates a reader. The reader comprises a channel 30 through which the card 2 can be swiped. A first light emitting source 32 and photo detector 34 are positioned such that light from the source 32 can be intercepted by the markers in the graticule 22. This gives an instantaneous indication of the speed of the card 2 along the slot 30. A second light source 36 is arranged opposite a second photo transistor 38 at a position such that the light from the source 36 passes through the coloured regions and guard bands towards the detector 38. This light source and detector combination forms an edge detection system to identify the boundaries of the coloured region. This information may be used in conjunction with the instantaneous measurement of speed from the graticule in order to accurately determine the spatial extent (width) of each coloured region. The light sources 32 and 36 may be inexpensive light emitting diodes.

A third light source 40 provides a "white" light. This may be an incandescent bulb although other suitable light sources may also be available such as white LEDs. These have a spectrum which is significantly different to that of an incandescent bulb. Nevertheless the combined spectral response of the LED and the pigment is still clearly identifiable. The white light source 40 is positioned opposite a multi channel charge couple device spectrometer 42 which monitors the relative intensities of a plurality of different wavelengths of light (or at least bands of light). Such detectors are commercially available, for example from MICROPARTS. This detector uses the modification of the spectrum it receives following filtering of the light by the imposition of one of the coloured regions 10, 12, 14, 16 or 18 to identify the characteristic spectrum of the ink or pigment used to form that band. Each of the detectors 34, 38 and 42 are connected to a signal conditioning device 44 which serves to buffer the signals, apply edge detection or hysteresis in order to clean the signals from the detectors 34 and 38, and which may also normalise and convert the output of the charge coupled device 42 from an analogue to a digital format. The digitised signals are then provided to a data processor 46 which uses the data concerning the characteristic spectrum and the spatial extent of any one or more of the regions 10 to 18 in order to determine what information is represented by each region.

This may be done using a mathematical algorithm, but more likely will be implemented in a lookup table since this is both quick and flexible.

The card has been described as being read in a light transmission mode. However, light reflected from the surface of the card/data carrier can also be analysed. As a further option, the fluorescence spectrum may also be measured, either as an alternative to or in addition to the transmission or reflection spectrum.

The code may be used to authenticate ownership of the card. The arrangement may be provided within automatic teller machines. It is expected that many tens of bars of colour can be printed in a strip on a credit card. Multiple strips may also be provided for increased coding options.

It is thus possible to provide a data carrier, and a reader which can encode a large number of data symbols in an inexpensive and secure way.

## Claims

1. Decoding apparatus for reading a data carrier (2) having a plurality of markers (4, 6) thereon, wherein each marker has a spectrum distinguishable from the others, the decoding apparatus comprising a broad band light source (40) arranged to illuminate the data carrier (2) **characterised by** said light source producing visible light and the decoding apparatus further comprising a multi channel spectrometer (42) arranged to measure the intensities of a plurality of wave lengths so as to accurately identify the spectrum of the or each marker, thereby distinguishing between markers which have the same colour to the human eye but different spectra.

2. Decoding apparatus according to claim 1, wherein said decoding apparatus includes an edge detector (36,38) arranged to detect the edges of said markers.

3. Decoding apparatus according to any one of claims 1 or 2, wherein said decoding apparatus is arranged to detect a graticule provided on said data carrier.

4. Decoding apparatus according to any one of claims 1 to 3, wherein said decoding apparatus comprises a spectrophotometer.

5. A method of decoding data carried on a data carrier, wherein the data is encoded by a plurality of markers having different spectra, the method comprising the steps of:
illuminating one of said markers on the carrier with a broadband source (40) of visible light;
reading its spectrum by means of a multi channel spectrometer (42); and
identifying the spectrum and in response to the identified spectrum accessing a lookup table to decode the information represented by the marker.

6. A method of decoding data according to claim 6, further comprising the steps of:
determining the spatial extent of said illuminated marker; and
accessing said lookup table to further decode the information represented by the marker.

## Patentansprüche

1. Decodiervorrichtung zum Lesen eines Datenträgers (2), der darauf mehrere Marken (4, 6) aufweist, wobei jede Marke ein Spektrum aufweist, das von den anderen unterscheidbar ist, wobei die Decodiervorrichtung, die eine breitbandige Lichtquelle (40) umfasst, so angeordnet wird, um den Datenträger (2) zu beleuchten, **dadurch gekennzeichnet, dass** die Lichtquelle, die sichtbares Licht erzeugt, und die Decodiervorrichtung, die weiterhin ein Mehrkanalspektrometer (42) umfasst, so angeordnet werden, um die Intensitäten mehrerer Wellenlängen zu messen, um das Spektrum der oder jeder Marke genau zu bestimmen, indem dadurch zwischen den Marken unterschieden wird, welche die gleiche Farbe für das menschliche Auge, aber unterschiedliche Spektren aufweisen.

2. Decodiervorrichtung nach Anspruch 1, wobei die Decodiervorrichtung einen Kantendetektor (36, 38) beinhaltet, der so angeordnet wird, um die Kanten der Marken zu erkennen.

3. Decodiervorrichtung nach einem der Ansprüche 1 oder 2, wobei die Decodiervorrichtung so angeordnet wird, um ein auf dem Datenträger bereitgestelltes Raster zu erkennen.

4. Decodiervorrichtung nach einem der Ansprüche 1 bis 3, wobei die Decodiervorrichtung ein Spektrofotometer umfasst.

5. Verfahren zum Decodieren der auf einem Datenträger enthaltenen Daten, wobei die Daten durch mehrere Marken codiert werden, die verschiedene Spektren aufweisen, wobei das Verfahren die Schritte umfasst:
Beleuchten einer der Marken auf dem Träger mit einer breitbandigen Quelle (40) von sichtbarem Licht;
Lesen seines Spektrums mit einem Mehrkanalspektrometer (42); und
Bestimmen des Spektrums und als Reaktion auf das bestimmte Spektrum, Zugreifen auf eine Nachschlagetabelle, um die durch die Marke dargestellten Informationen zu decodieren.

6. Verfahren des Decodierens von Daten nach Anspruch 6, weiterhin umfassend die Schritte:
Bestimmen der räumlichen Ausdehnung der beleuchteten Marke; und
Zugreifen auf die Nachschlagetabelle, um die durch die Marke dargestellten Informationen weiter zu decodieren.

## Revendications

1. Dispositif de décryptage pour lire un support de données (2) présentant une pluralité de marqueurs (4, 6) sur celui-ci, dans lequel chaque marqueur présente un spectre distinct des autres, le dispositif de décryptage comprenant une source de lumière à large spectre (40) prévue pour illuminer le support de données (2), **caractérisé en ce que** ladite source de lumière produit de la lumière visible et **en ce que** le dispositif de décryptage comprend en outre un spectromètre multicanal (42) prévu pour mesurer les intensités d'une pluralité de longueurs d'onde de manière à identifier de manière précise le spectre du, ou de chaque marqueur, faisant ainsi la distinction entre les marqueurs ayant la même couleur pour les yeux humains mais avec des spectres différents.

2. Dispositif de décryptage selon la revendication 1, dans lequel ledit dispositif de décryptage comprend un détecteur de contour (36, 38) prévu pour détecter les contours desdits marqueurs.

3. Dispositif de décryptage selon l'une quelconque des revendications 1 ou 2, dans lequel ledit dispositif de décryptage est prévu pour détecter un graticule repère porté par ledit support de données.

4. Dispositif de décryptage selon l'une quelconque des revendications 1 à 3, dans lequel ledit dispositif de décryptage comprend un spectrophotomètre.

5. Procédé de décryptage de données portées par un support de données, dans lequel les données sont encodées par une pluralité de marqueurs présentant différents spectres, le procédé comprenant les étapes suivantes :
. illumination d'un des marqueurs sur le support avec une source de lumière visible à large spectre (40) ;
. lecture de son spectre au moyen d'un spectromètre multicanal (42) ; et
. identification du spectre et, en réponse au spectre identifié, accès à une table de référence pour décrypter l'information représentée par le marqueur.

6. Procédé de décryptage de données selon la revendication 5, comprenant en outre les étapes suivantes :
. détermination de l'extension spatiale dudit marqueur illuminé ; et
. accès à la table de référence pour en outre décrypter l'information représentée par le marqueur.
